# EUROPEAN PATENT APPLICATION

(11) **EP 3 139 706 A1**
(43) Date of publication of application: **08.03.2017**
(21) Application number: 15183592.3
(22) Date of filing: 02.09.2015
(51) Int. Cl.: H05B 37/02

(54) **DISPLAY DEVICE AND METHOD OF ATTACHING PROJECTORS TO A DISPLAY DEVICE**

(71) Applicant: TP Vision Holding B.V., 1097 JB Amsterdam (NL)
(72) Inventor: Bruyneel, Filip Marcel Denise, B-9052 Ghent (BE); Standaert, Thomas, B-9052 Ghent (BE); Boudringhien, Julie Pauline Nelly, B-9052 Ghent (BE)
(74) Representative: DREISS Patentanwälte PartG mbB

(57) **Abstract**

The invention relates to a display device (1) comprising a first projector (3) and a second projector (5) at the back side of the display device (1). The first projector (3) emits a first light beam at least to the left or right and behind the display device (1). The second projector (5) emits a second light beam at least upward and behind the display device (1). The first projector (3) and the second projector (5) are positioned and oriented on the display device (1) such that the first light beam (23) and the second light beam (25) partly overlap and a luminance contribution of the light beam (23) in the area of overlap (24) is similar to a luminance contribution of the second light beam (25) in the area of overlap (24). The invention further relates to a method of attaching the projectors to the display device.

## Description

### Field of the invention

The invention relates to a display device.

The invention further relates to a method of attaching projectors to a display device.

### Background of the invention

WO2011/151755 A1 discloses a display device with ambient lighting in which Light Emitting Diodes (LEDs), located to the left and right of the display area, project ambient light on a wall surrounding the display device. The ambient lighting effects provided by this display device are known as Ambilight™ when used in televisions sold under the Philips™ brand. Certain models of these televisions additionally use LEDs located above the display area (three-sided Ambilight) to minimize interruptions in the halo surrounding the television.

A drawback of these display devices is that the provided ambient lighting has a low resolution.

### Summary of the invention

It is a first object of the invention to provide a display device, which is operative to provide high resolution ambient lighting effects while minimizing interruptions in the halo surrounding the display device.

It is a second object of the invention to provide a method of attaching projectors to a display device, which enables the display device to provide high resolution ambient lighting effects while minimizing interruptions in the halo surrounding the display device.

According to the invention, the first object is realized in that the display device comprises a display for displaying images, a first projector at the back side of the display device operative to emit a first light beam at least to the left or right and behind the display device and a second projector at the back side of the display device operative to emit a second light beam at least upward and behind the display device, wherein said first projector and said second projector are positioned and oriented on said display device such that said first light beam and said second light beam partly overlap and a luminance contribution of said first light beam in the area of overlap is similar to a luminance contribution of said second light beam in said area of overlap.

The use of projectors allows high resolution ambient lighting effects to be provided. By using projectors at both sides of a top corner and ensuring overlap of the light beams emitted by those projectors, an interruption of the halo in this top corner, i.e. no light in the top corner, is prevented. By ensuring that a luminance contribution of said first light beam in the area of overlap is similar to a luminance contribution of said second light beam in said area of overlap, configuring the projectors so that there are no significant luminance variations becomes much simpler.

Said first projector and said second projector may be positioned and oriented on said display device such that the point where said first light beam reaches a wall located in parallel to said display device and which is closest to the center of said display device and the point where said second light beam reaches said wall and which is closest to the center of said display device are different points on the same circle. This positioning and orientation result in said luminance contribution of said first light beam in the area of overlap being similar to said luminance contribution of said second light beam in said area of overlap.

Said first projector and said second projector may be positioned such that the positions of said first projector and said second projector are different points on the same circle with respect to said back side of said display device. This positioning and orientation results in said luminance contribution of said first light beam in the area of overlap being similar to said luminance contribution of said second light beam in said area of overlap.

Said first projector and said second projector may be positioned at least a certain distance away from the left, right and top sides of the display device. It is not necessary to ensure that ambient light is provided everywhere behind the display device, because most of this ambient light would not be visible to a user of the display device. However, ambient light should be provided in a minimum area near the left, right and top side of the display device to ensure proper ambient lighting effects when the display device is viewed at an angle.

Said first projector and said second projector may be positioned at least 55 cm away from the left and right sides of said display device and at least 59 cm away from the top side of said display device. Experimentation has shown that these distances ensure the best ambient lighting effects when a 65 inch display device is viewed at an angle and projectors with a throw ratio of 1.5 are used. The optimal distances depend on the screen size of the display device and the throw ratio of the projectors.

Said first projector may be configured to generate a first luminance profile for pixels in said area of overlap and a second luminance profile for a plurality of pixels outside said area of overlap and said second projector may be configured to generate a third luminance profile for pixels in said area of overlap and a fourth luminance profile for a plurality of pixels outside said area of overlap, said first and third luminance profiles each being a scalar multiplication of said second and fourth luminance profiles. This is a simple way of configuring the projectors so that there are no significant luminance variations, which is made possible by said luminance contribution of said first light beam in said area of overlap being similar to said luminance contribution of said second light beam in said area of overlap.

According to the invention, the second object is realized in that the method comprises the steps of attaching a first projector to the back side of a display device so that said first projector emits a first light beam at least to the left or right and behind the display device when said first projector receives a control signal and attaching a second projector to the back side of the display device so that said second projector emits a second light beam at least upward and behind the display device when said second projector receives a control signal, wherein said first projector and said second projector are positioned and oriented on said display device such that said first light beam and said second light beam partly overlap and a luminance contribution of said first light beam in the area of overlap is similar to a luminance contribution of said second light beam in said area of overlap.

Display devices that are not sold with ambient lighting projectors may be retrofitted with ambient lighting projectors according to the invention. When the ambient lighting effects are provided based on an analysis of the images that are shown by the display device, a device separate of the display device may be used to receive the same images as displayed on the display device and to analyze these images. This separate device may receive a video signal and pass it through to the display device, it may receive a video signal output by the display device or it may simply receive the same video signal that the display device is receiving, e.g. when a signal splitter is used.

### Brief description of the Drawings

These and other aspects of the invention are apparent from and will be further elucidated, by way of example, with reference to the drawings, in which:
- Fig.1 is a block diagram of the display device of the invention;
- Fig.2 is a block diagram of a first embodiment of the display device of the invention;
- Fig.3 shows the light beams emitted by the projectors of the first embodiment of the display device;
- Fig.4 shows the light beams emitted by the projectors of a second embodiment of the display device of the invention;
- Fig.5 shows a first halo around the display device of Fig.4 being realized and a second halo being desired;
- Fig.6 shows the second halo of Fig. 5 being realized with digital masking;
- Fig.7 shows a first halo around the display device of Fig.4 being realized and a third halo being desired;
- Fig.8 is a graph showing the luminance contribution of the two projectors according to the invention in a first overlap area;
- Fig.9 is a graph showing the luminance contribution of the two projectors according to the invention in a second overlap area;
- Fig.10 is a graph showing the luminance contribution of two projectors not according to the invention in the first overlap area;
- Fig.11 is a graph showing the luminance contribution of two projectors not according to the invention in the second overlap area; and
- Fig.12 is a flow diagram of an embodiment of the method of the invention.

Corresponding elements in the drawings are denoted by the same reference numeral.

### Detailed description of the Drawings

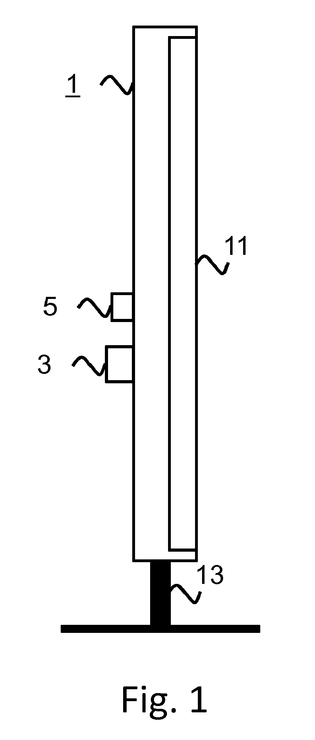

The display device 1 of the invention comprises a display 11 for displaying images, a first projector 3 and a second projector 5, see Fig.1. The first projector 3 is located at the back side of the display device and is configured to emit a first light beam at least to the left or right and behind the display device 1. The second projector 5 is also located at the back side of the display device and is configured to emit a second light beam at least upward and behind the display device 1. The first projector 3 and the second projector 5 are positioned and oriented on the display device 1 such that the first light beam and the second light beam partly overlap and a luminance contribution of the light beam in the area of overlap is similar to a luminance contribution of the second light beam in the area of overlap. The display device 1 may be a television or a monitor, for example. The projectors 3 and 5 may comprise a Texas Instruments .2" nHD, .24" VGA or .3" WVGA DMD, for example. The display 11 may be an LCD or OLED display panel, for example. The display device 1 may be installed on a display device stand 13 (e.g. for a monitor or a TV), for example. Alternatively, the display device 1 may be installed on a wall mount, for example. The display device 1 may further comprise components typical for a display device such as a television or a monitor, e.g. a power supply, an IR/RF receiver for receiving signals from a remote control, a central processing unit such as a TV SoC (e.g. manufactured by MediaTek or NovaTek), speakers, broadcast and connectivity connectors, e.g. HDMI, USB, coaxial in (for TV signal), coaxial and/or optical out (for audio), one or more wireless transceivers, e.g. WiFi or BlueTooth, one or more slots for a conditional access module, and/or one or more dedicated processors, e.g. for audio and/or video processing.

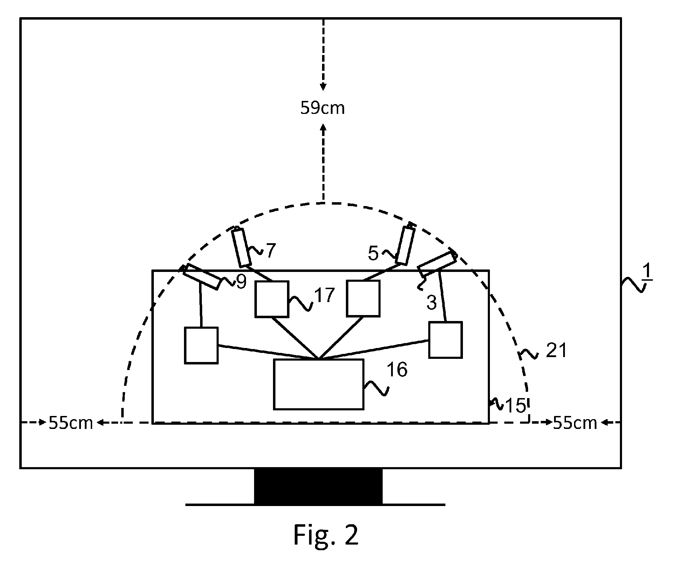

Fig.2 shows how the first projector 3 and the second projector 5 can be positioned on the display device 1 such that the first light beam and the second light beam partly overlap and a luminance contribution of the first light beam in the area of overlap is similar to a luminance contribution of the second light beam in the area of overlap. In the embodiment of Fig.2, this is achieved by positioning the first projector 3 and the second projector 5 such that the positions of the (lens of the) first projector 3 and the (lens of the) second projector 5 are different points on the same circle 21 with respect to the back side of the display device 1.

In the embodiment of Fig.2, the display device 1 further comprises a third projector 9 at the back side of the display device operative to emit a third light beam at least to the left or right and behind the display device 1 and a fourth projector 7 at the back side of the display device operative to emit a fourth light beam at least upward and behind the display device 1. In this embodiment, the first projector 3 emits the first light beam at least to the right of the display device 1 and the third projector 9 emits the third light beam at least to the left of the display device 1. In this embodiment, the positions of (the lenses of) all four projectors are different points on the same circle 21 with respect to the back side of the display device 1. In an alternative embodiment, the positions of the (lens of the) first projector 3 and the (lens of the) second projector 5 are different points on the same first circle and the positions of the (lens of the) third projector 7 and the (lens of the) fourth projector 9 are different points on the same second circle (the second circle being different from the first circle).

In the embodiment of Fig.2, the display device 1 has a screen size of 65 inches and the four projectors 3, 5, 7 and 9 have a throw ratio of 1.5 and are positioned at least 55 cm away from the left and right sides of the display device 1 and at least 59 cm away from the top side of the display device 1. First projector 3 is more than 55 cm away from the right side of the display device 1. Third projector 9 is more than 55 cm away from the left side of the display device 1. Second projector 5 and fourth projector 9 are more than 59 cm away from the top side of the display device. In the embodiment of Fig.2, the display device 1 comprises a printed circuit board 15 which comprises a content processor 16 and four light engine controllers 17. The content processor 16 may be a suitably programmed Xilinx Spartan-6 LX100 FPGA, for example. Each of the light engine controllers 17 may comprise a Texas Instruments DLPC2607 DLP Pico processor and a Texas Instruments PAD1000 LED controller, for example.

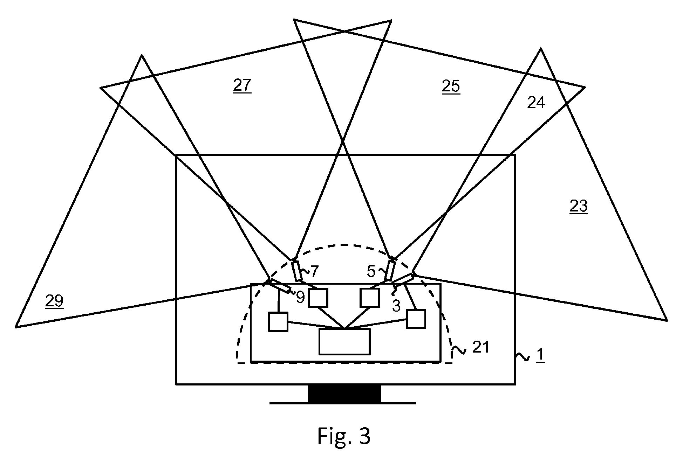

Fig.3 shows the light beams emitted by the embodiment of the display device 1 that is depicted in Fig.2. The first projector 3 emits a first light beam 23, mainly to the right, but also partly upward. The second projector 5 emits a second light beam 25, mainly upward, but also partly to the right. The third projector 9 emits a third light beam 29, mainly to the left, but also partly upward. The fourth projector 7 emits a fourth light beam 27, mainly upward, but also partly to the left. All four light beams emit light at least behind the display device 1, e.g. on a wall behind the display device 1, but part of the light beams may also be emitted perpendicular to the display device 1, for example. By positioning the (lens of the) first projector 3 and the (lens of the) second projector 5 such that the positions of these two projectors are different points on the same circle 21 with respect to the back side of the display device 1, the first light beam 23 and the second light beam 25 partly overlap and a luminance contribution of the first light beam 23 in the area of overlap 24 is similar to a luminance contribution of the second light beam 25 in the area of overlap 24. By further positioning the (lens of the) third projector 29 and the (lens of the) fourth projector 27 on the same circle 21 with respect to the back side of the display device 1, the luminance contributions of each two neighbouring light beams is similar in the other overlap areas as well.

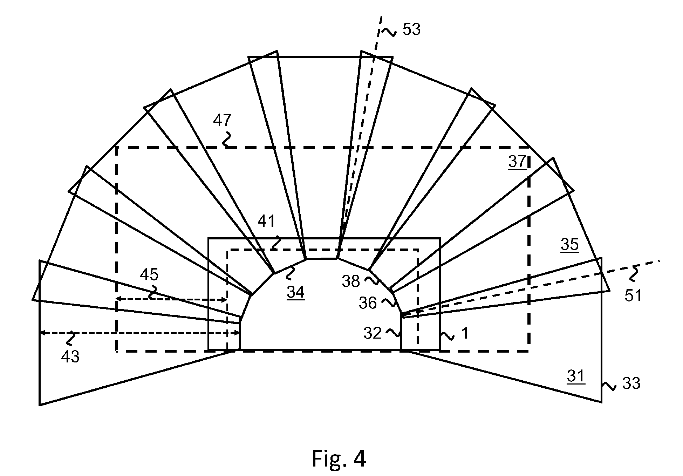

Fig. 4 shows the light beams projected by a second embodiment of the display device 1. In this second embodiment, the first projector 3 and the second projector 5 are positioned and oriented on the display device 1 such that the point where the first light beam 35 reaches a wall located in parallel to the display device 1 and which is closest to the center of the display device and the point where the second light beam 37 reaches the wall and which is closest to the center of the display device 1 are different points on the same circle 34.

The positioning and orientation of the projectors included in this second embodiment of the display device 1 is determined as explained below. First, a certain distance between the back cover of the display device 1 and the wall is assumed (e.g. 10 to 25cm). At this distance, the ambient lighting effects will be optimal. Then, a projector is positioned and rotated (angle in the plane of the display) at the bottom right side of the display device 1 in such a way that the bottom edge of the light beam emitted by this projector is at the desired position. This bottom edge defines the start of the halo/illuminated area on the wall. Then, this projector is tilted (angle in the plane perpendicular to the display) so that the first light on the wall 32 coming from this projector starts in the maximum black area 41 on the wall. This maximum black area 41 on the wall is the area on the wall behind the display device 1 where it is acceptable that there is no light coming from the projectors.

The inner edge of the halo on the wall, i.e. the circle 34, should be fully positioned in this maximum black area on the wall 41. This maximum black area on the wall 41 defines, together with the distance to the wall and the display device 1 edge (related to the display screen size), under what viewing angle the customer can still see light behind the display device 1. For the immersion effect of ambient lighting, it is important to avoid that the customer sees a black gap behind the display device 1 under a certain viewing angle. The picture on the display should smoothly transit to the light on the wall via the bezel/edge of the display device 1. This inner edge of the halo, i.e. the circle 34, is the line defined by the combination of the lines defining the first light for every individual projector included in the display device 1, including the first light on the wall 32, 36 and 38.

A further projector is positioned in such a way that the area illuminated by the further projector overlaps with the area illuminated by the first positioned projector and there are no black areas on the wall between the areas illuminated by the two projectors, especially in the area desired for the ambient lighting halo. Black areas in the ambient lighting halo can be very distracting for the viewer. The area illuminated by the projectors need to overlap. The bigger the overlap area is, the more projectors will be needed to build the display device 1 or a smaller throw ratio (or a bigger angle under which the light is exiting the projector), will be needed. In the overlap area the total luminance will be created by the light coming from both projectors. Normally, the overlap area would be visibly brighter than the illuminated area outside the overlap area. To avoid this, overlap correction is applied. This overlap correction can be done in a digital way (algorithms) or by adding optical components like e.g. diffusors in front of the projection lens.

Since the first projector 3 and the second projector 5 are positioned and oriented on the display device 1 such that the point where the first light beam 35 reaches a wall located in parallel to the display device 1 and which is closest to the lens of the first projector, i.e. one of the points of the first light on the wall 36, and the point where the second light beam 37 reaches the wall and which is closest to the lens of the second projector, i.e. one of the points of the first light on the wall 38, are different points on the same circle 34, the luminance contributions of the light beams emitted by the projectors are similar in the overlap area. An example of such positioning is shown in Fig.2. By ensuring that the luminance contributions of the light beams emitted by the projectors are similar in the overlap area, performing the overlap correction has become simpler.

The further projector also needs to be tilted to make sure that the maximum black area 41 behind the set is respected. The throw ratio of the projectors may be 1.0 to 1.8, for example. The tilt of the projectors may be 17 degrees, for example. The distortion of the projector on the projected image is preferably limited to approximately 2% (for the best performance). The angle of the display device with respect to the wall (rotation and tilt) is preferably limited to 3 degrees (for the best performance).

The throw ratio or the angle under which the light exits a projector is an important factor defining the size of the illuminated area. The combination of throw ratio or the angle under which the light exits, distance between the display device 1 back cover and the wall, projector position, tilt and rotation define the area of the wall that is illuminated by the projectors. The last light on the wall from the projectors, e.g. the last light on the wall 33 for the first positioned projector, defines the outer edge of the illuminated area. The outer edge of the illuminated area on the wall is the combination of the lines defining the last light for every individual projector included in the display device 1, including the last light on the wall 33.

To obtain the best ambient lighting effects, only part of the area that is illuminated when all pixels of the projectors are active is used. By using digital masking, pixels of a projector can be 'deactivated' to change the light beam emitted by the projector. A desired ambient lighting halo 47 can be created between the bottom edge of the light beam emitted by the first positioned projector, the inner edge of the illuminated area on the wall (circle 34), the outer edge of the illuminated area on the wall and the bottom edge of the light beam emitted by the last positioned projector. In Fig. 4, the width of the illuminated area is illustrated with reference numeral 43 and the width of the desired ambient lighting halo 47 is illustrated with reference numeral 45.

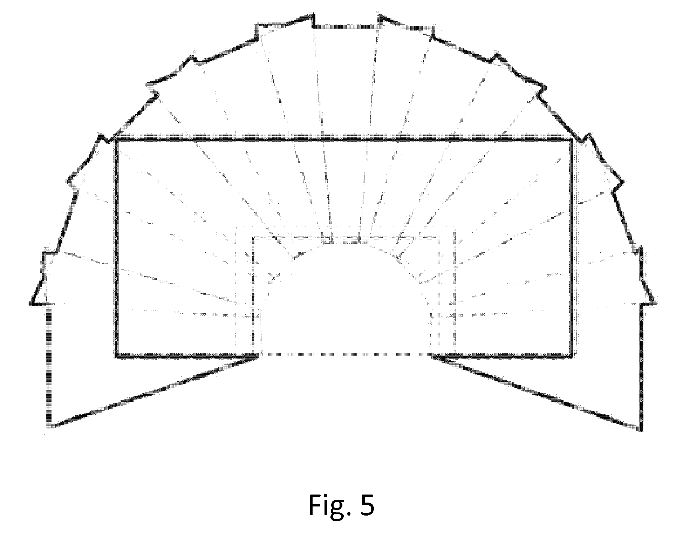

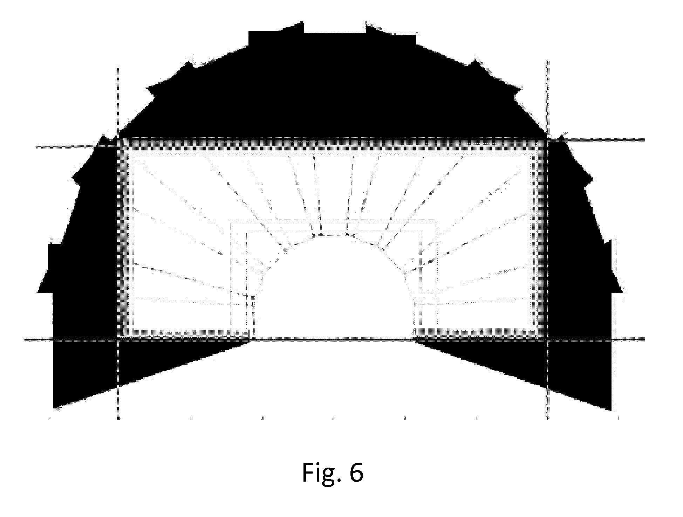

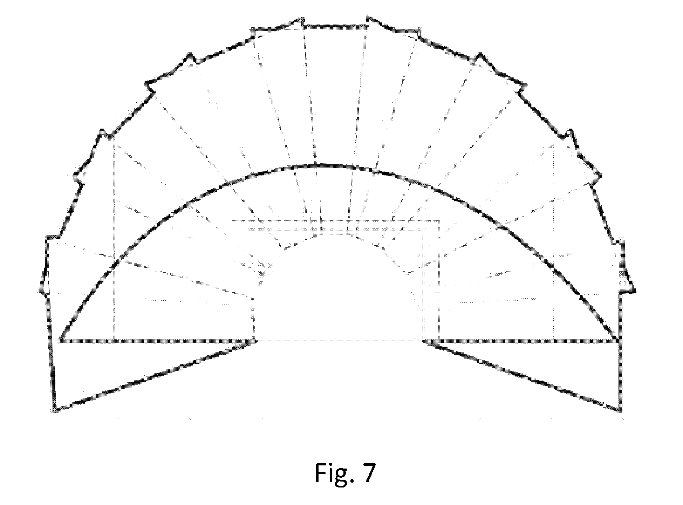

Fig. 5 shows the area that is illuminated when all pixels of the projectors are active, the larger area, and a first desired ambient lighting halo, the smaller area. Fig. 6 shows digital masking being used to deactivate pixels outside the first desired ambient lighting halo, i.e. to switch those pixels to the full black state. Fig. 7 shows the area that is illuminated when all pixels of the projectors are active, the larger area, and a second desired ambient lighting halo, the smaller area. The shape of the ambient lighting halo can be chosen depending on a designer's or customer's preference.

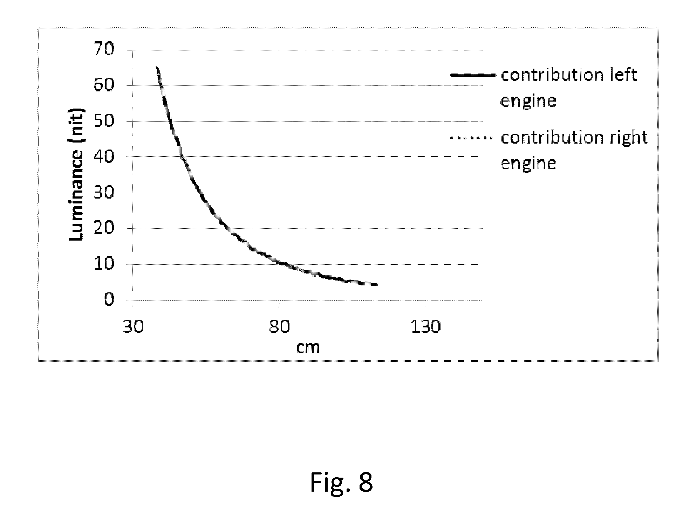

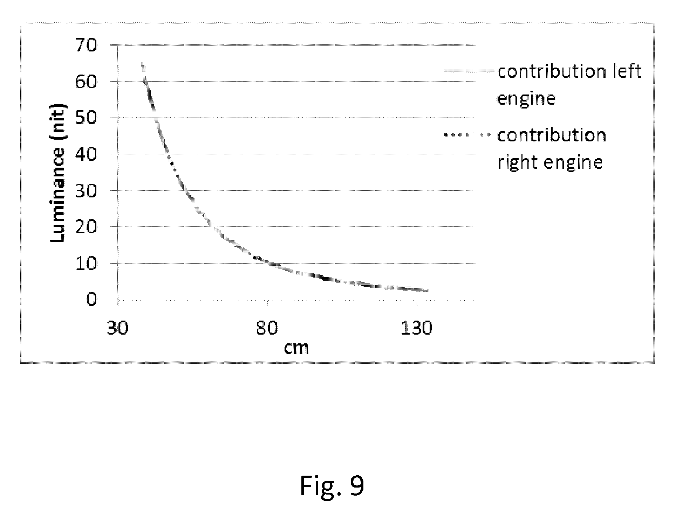

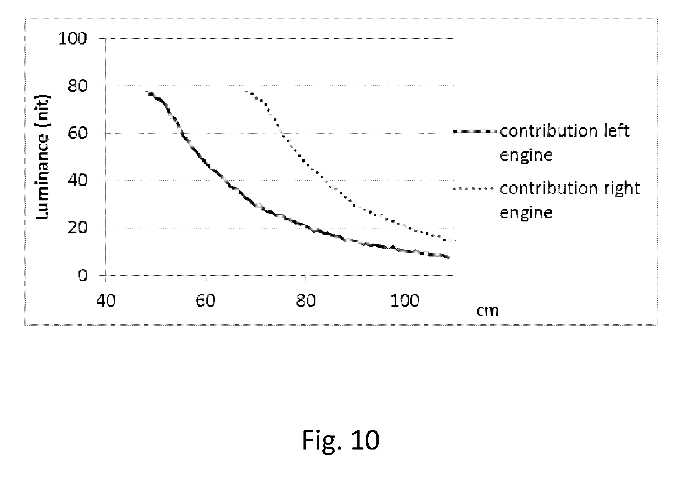

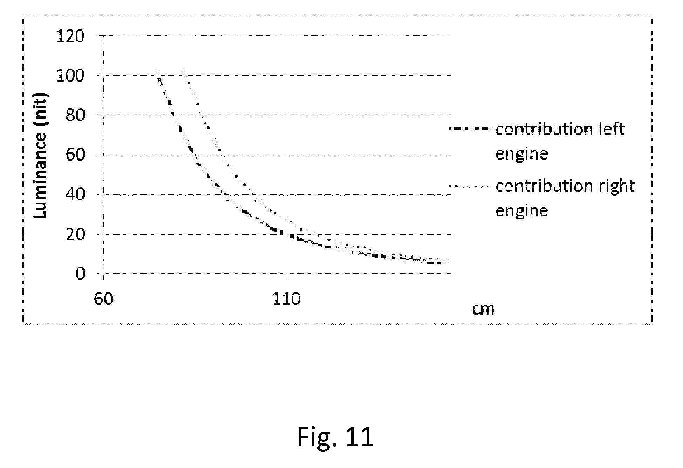

That the overlap correction is simpler in the display device 1 than in a display device that does not use the present invention is illustrated by Figs. 8 to 11. Figs. 8 to 11 each show the luminance contribution/profile of two neighboring projectors as measured in the radial direction. In order to perform the measurements, the halo on the (white) wall behind the display device was measured with a camera approximately 8 meters from the wall. The display device was approximately 20 cm away from the wall perpendicular to the wall. Fig. 8 shows the luminance contribution/profile of the two projectors (light engines) according to the invention in a first overlap area. Fig. 8 is measured along line 53 of Fig.4. Fig. 9 shows the luminance contribution/profile of the two projectors (light engines) according to the invention in a second overlap area. Fig. 9 is measured along line 51 of Fig.4. Fig. 10 shows the luminance contribution/profile of two projectors (light engines) that have not been positioned and oriented according to the invention in the first overlap area. Fig. 10 is measured along a line that is similar to line 53 of Fig.4, but now using projectors that have not been positioned and oriented according to the invention. Fig. 11 shows the luminance contribution/profile of two projectors (light engines) that have not been positioned and oriented according to the invention in the second overlap area. Fig. 11 is measured along a line that is similar to line 51 of Fig.4, but now using projectors that have not been positioned and oriented according to the invention. In Figs. 8 and 9, the luminance profile of the first projector has the same shape as the luminance profile of the second projector and the luminance profiles of both projectors start at the same position. In Figs. 10 and 11, the luminance profiles of the two projectors have a very different shape and start at different positions.

When both projectors are configured to have the same light output and nominal optical design, the luminance contribution of both projectors to an overlap area will be the same. Without overlap correction, the overlap area would be a scalar summation of the two luminance profiles of the two light engines. To avoid this difference in luminance between the overlapping area and the non-overlapping areas, a scalar multiplication can be performed of both luminance profiles in the area of overlap, which results in a lower luminance emitted by each individual projector in the area of overlap. In other words, the first projector generates a first luminance profile for pixels in the area of overlap and a second luminance profile for a plurality of pixels outside the area of overlap, the second projector generates a third luminance profile for pixels in the area of overlap and a fourth luminance profile for a plurality of pixels outside the area of overlap, and the first and third luminance profiles are each a scalar multiplication of the second and fourth luminance profiles.

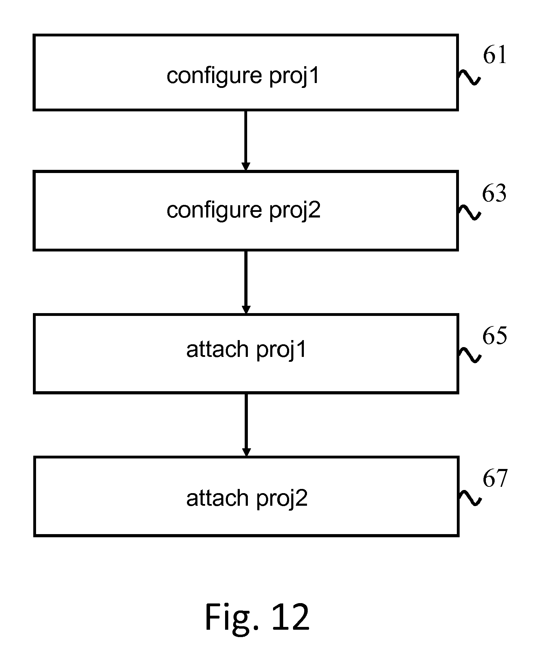

In an embodiment, the method of attaching projectors to a display device of the invention comprises four steps, see Fig. 12. A step 65 comprises attaching a first projector at the back side of a display device so that the first projector emits a first light beam at least to the left or right and behind the display device when the first projector receives a control signal. A step 67 comprises attaching a second projector at the back side of the display device so that the second projector emits a second light beam at least upward and behind the display device when the second projector receives a control signal. The first projector and the second projector are positioned and oriented on the display device such that the first light beam and the second light beam partly overlap and a luminance contribution of the first light beam in the area of overlap is similar to a luminance contribution of the second light beam in the area of overlap. The control signal may be the signal transmitted by the light engine controller 17 of Fig.2, for example.

In this embodiment, steps 61 and 63 are performed before steps 65 and 67. Step 61 comprises configuring a first projector to generate a first luminance profile for pixels in the area of overlap and a second luminance profile for a plurality of pixels outside the area of overlap. Step 63 comprises configuring the second projector to generate a third luminance profile for pixels in the area of overlap and a fourth luminance profile for a plurality of pixels outside the area of overlap, the first and third luminance profiles each being a scalar multiplication of the second and fourth luminance profiles. In an alternative embodiment, step 65 is performed before step 63 or steps 63 and 67 are performed before steps 61 and 65. In an alternative embodiment, step 65 is performed before step 61 and/or step 67 is performed before step 63, i.e. the projectors are configured after they have been attached. In an alternative embodiment, the configuration steps 61 and 63 do not involve a scalar multiplication of luminance profiles.

Preferably, the four steps 61, 63, 65 and 67 are performed during manufacturing of the display device. However, it is also possible to retrofit an already manufactured display device with projectors as explained in the Summary of the Invention.

In the same or in a different embodiment, the first projector and the second projector are positioned and oriented on the display device such that the point where the first light beam reaches a wall located in parallel to the display device and which is closest to the lens of the first projector and the point where the second light beam reaches the wall and which is closest to the lens of the second projector are different points on the same circle. In the same or in a different embodiment, the first projector and the second projector are positioned such that the positions of the first projector and the second projector are different points on the same circle with respect to the back side of the display device. In the same or in a different embodiment, the first projector and the second projector are positioned at least a certain distance away from the left, right and top sides of the display device. For example, the first projector and the second projector may be positioned at least 55 cm away from the left and right sides of the display device and at least 59 cm away from the top side of the display device when the display device has a screen size of 65 inches and the projectors have a throw ratio of 1.5.

While the invention has been described in connection with preferred embodiments, it will be understood that modifications thereof within the principles outlined above will be evident to those skilled in the art, and thus the invention is not limited to the preferred embodiments but is intended to encompass such modifications. The invention resides in each and every novel characteristic feature and each and every combination of characteristic features. Reference numerals in the claims do not limit their protective scope. Use of the verb "to comprise" and its conjugations does not exclude the presence of elements other than those stated in the claims. Use of the article "a" or "an" preceding an element does not exclude the presence of a plurality of such elements.

'Means', as will be apparent to a person skilled in the art, are meant to include any hardware (such as separate or integrated circuits or electronic elements) or software (such as programs or parts of programs) which perform in operation or are designed to perform a specified function, be it solely or in conjunction with other functions, be it in isolation or in co-operation with other elements. The invention can be implemented by means of hardware comprising several distinct elements, and by means of a suitably programmed computer. The mere fact that certain measures are recited in mutually different dependent claims does not indicate that a combination of these measures cannot be used to advantage.

## Claims

1. A display device (1), comprising:
a display (11) for displaying images;
a first projector (3) at the back side of the display device operative to emit a first light beam at least to the left or right and behind the display device (1); and
a second projector (5) at the back side of the display device operative to emit a second light beam at least upward and behind the display device (1),
wherein said first projector (3) and said second projector (5) are positioned and oriented on said display device (1) such that said first light beam (23, 35) and said second light beam (25, 37) partly overlap and a luminance contribution of said first light beam (23, 35) in the area of overlap (24) is similar to a luminance contribution of said second light beam (25, 37) in said area of overlap (24).

2. A display device (1) as claimed in claim 1, wherein said first projector (3) and said second projector (5) are positioned and oriented on said display device (1) such that the point where said first light beam (23, 35) reaches a wall located in parallel to said display device (1) and which is closest to the lens of said first projector and the point where said second light beam (25, 37) reaches said wall and which is closest to the lens of said second projector are different points on the same circle (34).

3. A display device (1) as claimed in claims 1 or 2, wherein said first projector (3) and said second projector (5) are positioned such that the positions of said first projector (3) and said second projector (5) are different points on the same circle (21) with respect to said back side of said display device.

4. A display device (1) as claimed in any of the preceding claims, wherein said first projector (3) and said second projector (5) are positioned at least a certain distance away from the left, right and top sides of the display device (1).

5. A display device (1) as claimed in any of the preceding claims, wherein said first projector (3) is configured to generate a first luminance profile for pixels in said area of overlap (24) and a second luminance profile for a plurality of pixels outside said area of overlap and said second projector (5) is configured to generate a third luminance profile for pixels in said area of overlap (24) and a fourth luminance profile for a plurality of pixels outside said area of overlap, said first and third luminance profiles each being a scalar multiplication of said second and fourth luminance profiles.

6. A method of attaching projectors to a display device, comprising the steps of:
attaching (65) a first projector to the back side of a display device so that said first projector emits a first light beam at least to the left or right and behind the display device when said first projector receives a control signal; and
attaching (67) a second projector to the back side of the display device so that said second projector emits a second light beam at least upward and behind the display device when said second projector receives a control signal,
wherein said first projector and said second projector are positioned and oriented on said display device such that said first light beam and said second light beam partly overlap and a luminance contribution of said first light beam in the area of overlap is similar to a luminance contribution of said second light beam in said area of overlap.

7. A method as claimed in claim 6, wherein said first projector and said second projector are positioned and oriented on said display device such that the point where said first light beam reaches a wall located in parallel to said display device and which is closest to the lens of said first projector and the point where said second light beam reaches said wall and which is closest to the lens of said second projector are different points on the same circle.

8. A method as claimed in claim 6 or 7, wherein said first projector and said second projector are positioned such that the positions of said first projector and said second projector are different points on the same circle with respect to said back side of said display device.

9. A method as claimed in any of claims 6 to 8, wherein said first projector and said second projector are positioned at least a certain distance away from the left, right and top sides of the display device.

10. A method as claimed in any of claims 6 to 9, further comprising the steps of configuring (61) said first projector to generate a first luminance profile for pixels in said area of overlap and a second luminance profile for a plurality of pixels outside said area of overlap and configuring (63) said second projector to generate a third luminance profile for pixels in said area of overlap and a fourth luminance profile for a plurality of pixels outside said area of overlap, said first and third luminance profiles each being a scalar multiplication of said second and fourth luminance profiles.
